# EUROPEAN PATENT APPLICATION

(11) **EP 3 124 790 A1**
(43) Date of publication of application: **01.02.2017**
(21) Application number: 15178671.2
(22) Date of filing: 28.07.2015
(51) Int. Cl.: F03D 9/00, F03B 13/18

(54) **OFFSHORE WIND POWER PLANT**

(71) Applicant: Siemens Aktiengesellschaft, 80333 München (DE)
(72) Inventor: Vad, Claus, 7400 Herning (DK)

(57) **Abstract**

The invention relates to a power plant to harvest renewable energy.

An offshore wind power plant to generate electrical energy comprises at least one offshore wind turbine. The offshore wind power plant comprises an installation 3 to convert the electrical energy to adapt to the electrical conditions in a power grid, and the offshore wind power plant comprises a connection 2 to connect the wind power plant to the electrical power grid on-shore.

The offshore wind power plant comprises a wave energy power plant 4 to convert the energy of waves on sea into electrical energy. The wave energy power plant is electrically connected 5 to the installations 3 to convert the electrical energy of the offshore wind power plant.

## Description

The invention relates to a power plant to harvest renewable energy.

It is known to harvest renewable energy from the wind by wind turbines. Wind turbines are set up where the wind is highly available, it is strong enough to be exploited and blows to a high percentage of time.

Wind turbines are installed onshore or offshore.

The wind energy is converted into electrical energy by a generator present in the wind turbine. The electrical energy is transformed to the right voltage and converted in frequency and phase, so that the electrical energy can be delivered into the power grid.

The wind power plant is connected to the power grid to deliver electrical power to the grid, and to have power available in the wind turbine when the wind turbine is not in operation. A sea cable is installed between the wind power plant and the shore, to transport the electrical energy on-shore and deliver it to the power grid.

Offshore wind turbines are often connected to form a wind farm or wind park. Two or more wind turbine, sometimes over a hundred wind turbine, are installed on sea and are electrically connected to deliver electrical energy to the power grid. A wind power plant can comprise one or more wind turbines.

Wind turbines in a wind park share common electrical facilities like transformers, converters, or the sea cable connection to the main land. Thus all the installation is provided to deliver electrical power from renewable energy to the main land.

The wind park itself is limited in its power by the number of wind turbines. In addition, when there is no or only a little wind blowing, no energy is harvested and the installations rest unused.

The aim of the invention is to provide an enhanced power plant to harvest renewable energy.

The object of the invention is achieved by the independent claim. Further features of the invention are disclosed in the dependant claims.

An offshore wind power plant to generate electrical energy is disclosed, that comprises at least one offshore wind turbine. The offshore wind power plant comprises an installation to convert the electrical energy to adapt to the electrical conditions in a power grid. The offshore wind power plant comprises a connection to connect the wind power plant to the electrical power grid on-shore.

The offshore wind power plant comprises a wave energy power plant to convert the energy of waves on sea into electrical energy. The wave energy power plant is electrically connected to the installations to convert the electrical energy of the offshore wind power plant.

An offshore wind power plant comprises at least one wind turbine. The offshore wind turbine is installed in the seawater and is connected to the seabed by a foundation. The tower of the offshore wind turbine is connected to the foundation. The tower and the foundation build the support structure of the wind turbine.

An offshore wind power plant is installed in an area where the seawater shows depths of several meters. This can be from 2 meters up to 20 meters for example.

An offshore wind power plant comprises installations to convert electrical energy to adapt it to the electrical conditions in the power grid. These installations comprise a transformer, for example, and a converter. Thus, the electrical energy of the wind turbine can be converted in voltage, frequency and phase of the electrical power.

The offshore wind power plant comprises an offshore wind turbine. The offshore wind turbine can comprise the installations to convert the electrical energy.

The offshore wind power plant might comprise a single wind turbine or a plurality of wind turbines. The installations to convert the electrical energy can be installed in a single wind turbine, for example. The installations can also be installed centrally for several of the wind turbines in the wind turbine power plant.

An offshore wind turbine is installed in a shallower region close to the coast. These regions at sea show also a high wave activity of the seawater. The offshore wind power plant comprises also a wave energy power plant that is connected to the support structure of the wind turbine.

The wave energy power plant is electrically connected to the installation to transform the electrical energy that is present in the wind turbine power plant. Thus, an additional of renewable energy can be exploited by the power plant.

At the site of the offshore wind turbine, a connection to the power grid and also the installations to transform the electrical energy are already present. These installations can be used by the wave energy power plant in addition to the wind turbine. Thus, no or a few additional installations are needed for the wave energy power plant to convert the energy or to deliver it to the power grid onshore.

The wind turbine comprises a support structure comprising a tower and a foundation.

The wave energy power plant is connected to the support structure of the wind turbine. The wind turbine installation comprises a support structure that connects the wind turbine with the seabed.

The support structure of the wind turbine has to be rigid enough to withstand the wind forces and the wave forces present at the site of the wind turbine power plant. Thus, no additional foundation is needed to install a wave energy power plant.

The wave energy power plant comprises a floater that is capable to float on seawater.

The floater is connected to the support structure in a way that it is capable of being displaced mainly vertically by a change in the level of the seawater. The floater is floating on the seawater. Thus, the floater is raised by the waves in the seawater. Thus, the movement of the waves in the seawater is translated into a mainly vertical movement of the floater.

Offshore wind turbine power plant is installed in shallow seawater where the depth of the water is between 2 m and 20 m for example. When waves of the seawater enter the shallow area of the sea they get steeper and higher. Thus, exploiting the energy of waves by translating the movement of the wave into a vertical movement of a floater is especially profitable in shallow seawater.

The floater is connected to a rod and the rod is connected to the support structure by a joint to allow the movement of the floater in respect to the support structure.

The floater transforms the movement of the waves into a mainly vertical movement of the floater. The floater is connected via a rod to the support structure. The rod is connected to the support structure via a joint to allow a movement of the floater in a vertical direction in respect to the support structure. Thus, the floater can perform the mainly vertical movement.

The wave energy power plant comprises an electrical generator to convert the energy of the movement of the floater into electrical energy.

The wind turbine power plant already comprises installations to generate, transform and convert electrical energy and to deliver it to the power grid onshore. By transforming the energy of the waves into electrical energy, the installations already present in the wind turbine power plant can be used.

Thus, the electrical energy generated by the generator of the wave energy power plant can also be transformed, converted and transported by the installations present in the wind turbine.

Thus, no additional installations are needed to transform the energy harvested by the wave energy power plant.

The electrical generator is a linear generator converting a linear movement into electrical energy.

The floater of the wave energy power plant performs a more or less vertical movement along the support structure of the wind turbine. Thus, using a linear electrical generator, the movement of the floater can directly be translated into electrical energy. Thus, no additional translation mechanism, like a gear, is needed.

The linear electrical generator comprises a first end that is connected to the floater and a second end that is connected to the support structure.

Thus, the linear electrical generator directly translates the movement of the floater into electrical energy.

The linear electrical generator comprises two parts, whereby the first part comprises a coil and the second part comprises a permanent magnet.

The parts are capable to move in respect to each other in a way that the electric current is induced in the coil by the permanent magnet. The linear electrical generator comprises two parts that can be moved in respect to each other. One part is connected to the floater and the other part is connected to the support structure of the wind turbine.

Thus, the movement of the floater moves one part in respect to the other part of the linear electrical generator. One part comprises a permanent magnet and the other part comprises a coil.

The movement of one part results in a movement of the permanent magnet in respect to the coil. Thus, the current is induced in the coil by the movement of the permanent magnet. Thus, the movement of the floater is translated into electrical energy.

The first part of the linear electrical generator is attached to the support structure of the wind turbine and the second part is attached to the rod of the floater.

The movement of the floater leads to a movement of the rod. The movement of the rod leads to a movement of the second part of the linear electrical generator in respect to the first part. The second part of the linear electrical generated is attached to the rod. Thus, the rod acts as a lever that transforms the force present at the floater into a higher force present at the linear electrical generator.

The linear electrical generator is electrically connected to an electrical converter to convert an electrical power in voltage, frequency and phase.

The electrical power generated by the linear electrical generator needs to be converted to be adapted to the voltage in the power grid. Thus, the electrical converter gives the electrical energy the right voltage, frequency and phase.

The electrical converter of the linear generator is electrically connected to an electrical installation of the wind turbine.

The wind turbine power plant comprises electrical installations that are needed to transform and convert the electrical energy generated in the wind turbine to adapt to the grid conditions of the power grid.

These installations of the wind turbine can also be used for the electrical energy harvested by the wave energy power plant. Thus, less additional installations are needed for the wave energy power plant.

The offshore wind power plant comprises at least two wave energy power plants, preferably more than four wave energy power plants.

An offshore wind power plant comprises a wind turbine and a wave energy power plant. The wave energy power plant is connected to the support structure of the wind turbine. The support structure of the wind turbine comprises a tower and a foundation. Two or more wave energy power plants can be connected to the support structure of the wind turbine. Preferably more than four wave energy power plants can be arranged in a star-shaped manner around the support structure of the wind turbine. Thus, in addition to wind energy, also the wave energy can be harvested.

By using more than one wave energy power plants, the harvesting of the renewable energy can be optimized.

The invention is shown in more detail by the help of figures. The figures show a preferred configuration and do not limit the scope of the invention.
- FIG 1: shows a offshore wind power plant,
- FIG 2: shows another view of the offshore wind power plant,
- FIG 3: shows a birds-eye view of wind turbine of the offshore wind power plant.

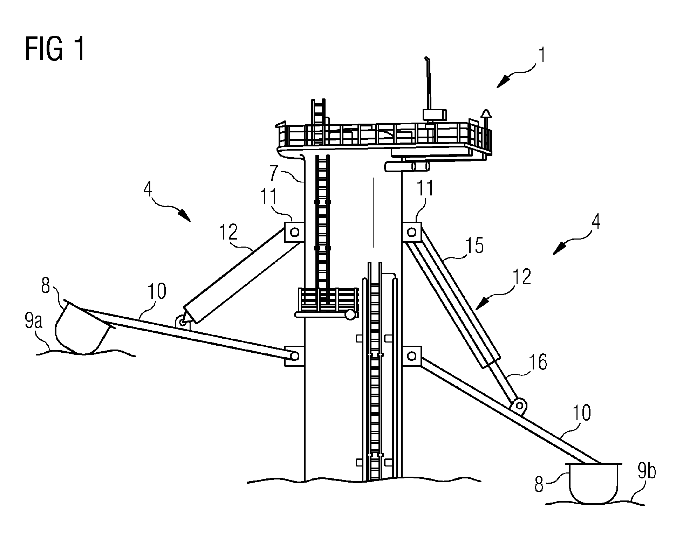

FIG 1 shows a offshore wind power plant.

Figure 1 shows a support structure 1 of an off-shore wind turbine. The support structure 1 comprises a foundation 7.

A wave energy power plant 4 is connected to the foundation 7. The wave energy power plant 4 comprises a floater 8 that is connected to a rod 10. The rod 10 is connected to the foundation 7.

A linear electrical generator 12 is connected to the rod 10 with one end and to the foundation 7 with the other end. The linear electrical generator 12 is connected to the foundation 7 by a joint 11.

The linear electrical generator 12 comprises a first part 15 and a second part 16. The first part 15 comprises a coil and the second part 16 comprises a permanent magnet. The first part 15 and the second part 16 are capable to move in respect to each other.

The floater 8 and the rod 10 are connected to the foundations 7 in a way that the floater 8 can be displaced mainly vertically by the rising and falling seawater level.

The first part 15 of the linear electrical generator 12 is connected via a joint 11 to the foundation 7. The second part 16 of the linear electrical generator 12 is connected to the rod 10.

When the seawater level rises, the floater 8 is lifted upward. Thus, the rod 10 is lifted upward and moves the second part 16 of the linear electrical generator 12 in respect to the first part 15.

Thus, the permanent magnets of the second part 16 are moved in respect to the coil of the first part 15. Thus, an electric current is induced in the coils in the first part 15.

In the example shown in Figure 1 the second part 16 of the linear electrical generator 12 is rod-shaped and the first part 15 is shaped like a sleeve wrapped around the second part 16.

At a low seawater 9B the floater 10 is in a low position and the second part 16 is extended in respect to the first part 15 of the linear electrical generator 12. At a high seawater level 9A the floater 8 is in a high position. Thus, the second part 16 is pushed into the first part 15 of the linear electrical generator 12.

A wave in the seawater is changing the seawater level between the high water level 9A and the low water level 9B. Thus, a wave rises and lowers the floater 8. Thus the linear electrical energy generator 12 is extended and retracted by the waves of the seawater. Thus, the energy of the waves of the seawater can be converted into electrical energy by the linear electrical generator 12.

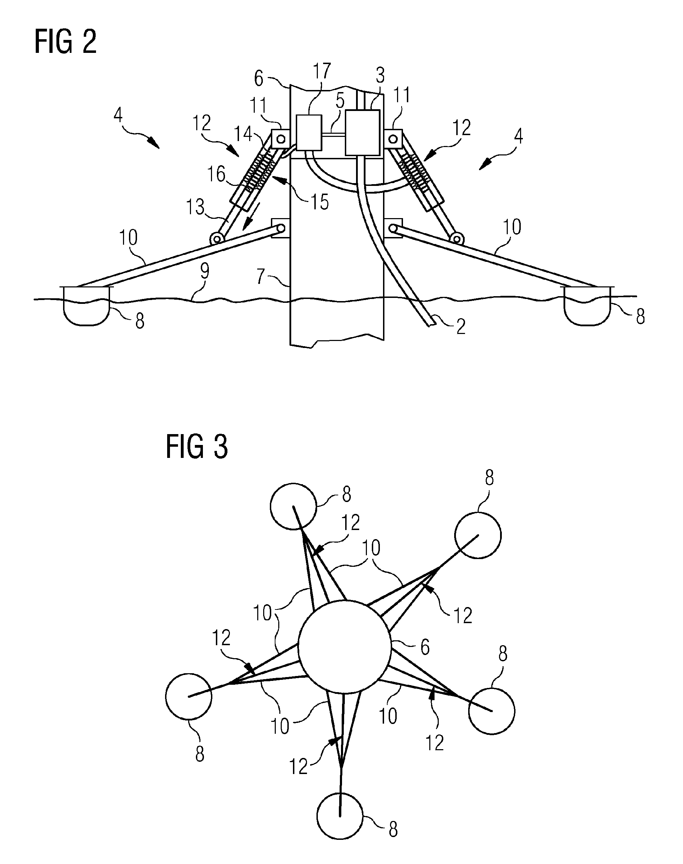

FIG 2 shows another view of the offshore wind power plant.

The offshore wind power plant comprises a wind turbine. The wind turbine comprises a support structure and the support structure comprises a tower 6 and a foundation 7.

A wave energy power plant 4 is connected to the support structure of the wind turbine. The wave energy power plant 4 comprises a floater 8 that is raised and lowered by the seawater level 9. The floater 8 is connected to a rod 10 that is connected to the foundation 7 of the wind turbine.

A linear electrical generator 12 is connected between the rod 10 and the tower 6 of the wind turbine. A first end 13 is connected to the rod 10 and a second end 14 of the linear electrical generator 12 is connected via a joint 11 to the tower 6 of the wind turbine. The linear electrical generator 12 comprises a first part 15 that comprises a coil and a second part 16 that comprises a permanent magnet.

Due to the movement of the floater 8 the permanent magnet of the second part 15 is moved in respect to the coil of the first part 15 of the linear electrical generator 12. Thus, a current is induced in the coil of the first part 15 by the permanent magnet of the second part 16.

The offshore wind power plant comprises an installation 3 that transforms and/or converts the electrical energy generated by the wind turbine to adapt it to the condition of a power grid on-shore. The wind power plant is connected to the power grid on-shore by an electrical connection 2. This can be a sea cable.

The linear electrical generator 12 of the wave energy power plant 4 is connected to a converter 17 that is connected by an electrical connection 5 to the installation of the wind turbine 3. The converter 17 of the wave energy power plant 4 converts the electrical energy of the wave energy power plant 4 to adapt it to the electrical conditions of the electrical energy of the wind turbine.

FIG 3 shows a birds-eye view of the offshore wind power plant.

The offshore wind power plant 4 comprises a wind turbine that comprises a tower 6. A number of wave energy power plants are arranged around the tower 6. Floaters 8 are connected by a rod 10 to the tower 6. A linear electrical generator 12 is arranged between the rod 10 and the tower 6 to transform the energy of the movement of the floater 8 to electrical energy.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Offshore wind power plant to generate electrical energy, comprising at least one offshore wind turbine,
- whereby the offshore wind power plant comprises an installation (3) to convert the electrical energy to adapt to the electrical conditions in a power grid,
- whereby the offshore wind power plant comprises a connection (2) to connect the wind power plant to the electrical power grid on-shore,
**characterized in that**
the offshore wind power plant comprises a wave energy power plant (4) to convert the energy of waves on sea into electrical energy, whereby the wave energy power plant is electrically connected (5) to the installations (3) to convert the electrical energy of the offshore wind power plant.

2. Offshore wind power plant according to claim 1, whereby the offshore wind turbine comprises a support structure (1), comprising a tower (6) and a foundation (7), **characterized in that** the wave energy power plant (4) is connected to the support structure (1) of the wind turbine.

3. Offshore wind power plant according to one of the preceding claims, **characterized in that** the wave energy power plant (4) comprises a floater (8) that is capable to float on sea water, whereby the floater (8) is connected to the support structure (1) in a way that it is capable of being displaced mainly vertically by a change in the level of the sea water.

4. Offshore wind power plant according to claim 3, **characterized in that** the floater (8) is connected to a rod (10), and the rod (10) is connected to the support structure (1) by a joint, to allow the movement of the floater (8) in respect to the support structure (1).

5. Offshore wind power plant according to claim 4, **characterized in that** the wave energy power plant (4) comprises an electrical generator (12), to transform the energy of the movement of the floater (10) into electrical energy.

6. Offshore wind power plant according to claim 5, **characterized in that** the electrical generator (12) is a linear electrical generator, to transform a linear movement into electrical energy.

7. Offshore wind power plant according to claim 6, **characterized in that** the linear electrical generator comprises a first end (13), that is connected to the floater (10) and a second end (14), that is connected to the support structure (10).

8. Offshore wind power plant according to claim 7, **characterized in that** the linear electrical generator (12) comprises two parts (15, 16), whereby a first part (15) comprises a coil and the second part (16) comprises a permanent magnet, whereby the parts (15, 16) are capable to move in respect to each other, in a way that an electric current is induced in the coil by the permanent magnet.

9. Offshore wind power plant according to claim 8, **characterized in that** the first part (15) of the linear electrical generator (12) is attached to the support structure (1) of the wind turbine and the second part (16) is attached to the rod (10) of the floater (8).

10. Offshore wind power plant according to claim 9, **characterized in that** the linear electrical generator (12) is electrically connected to an electrical converter (17) to convert the electrical power in voltage, frequency and phase.

11. Offshore wind power plant according to claim 10, **characterized in that** the electrical converter (17) of the linear generator comprises a connection (5) to an electrical installation (3) of the wind turbine.

12. Offshore wind power plant according to one of the preceding claims, **characterized in that** the offshore wind power plant comprises at least two wave energy power plants (4), preferably more than four wave energy power plants (4).
